# FASCICULE DE BREVET EUROPEEN

(11) **EP 2 621 769 B1**
(45) Date de publication et mention de la délivrance du brevet: **02.09.2020**
(21) Numéro de dépôt: 11766945.7
(22) Date de dépôt: 28.09.2011
(51) Int. Cl.: B60R 25/00, B60R 25/10, G07C 9/00, H04L 29/06

(54) **PROCÉDÉ D'APPAIRAGE D'UN TÉLÉPHONE MOBILE AVEC UN VÉHICULE AUTOMOBILE ET ENSEMBLE DE VERROUILLAGE/DÉVERROUILLAGE**
VERFAHREN ZUR PAARUNG EINER MOBILTELEFON MIT EINEM KRAFTFAHRZEUG UND SPERR/ENTSPERR GESAMTHEIT
METHOD OF PAIRING OF A MOBILE PHONE WITH A MOTOR VEHICLE AND A LOCK / UNLOCK SET

(30) Priorité: 28.09.2010 FR 1003839
(43) Date de publication de la demande: 07.08.2013
(73) Titulaire: Valeo Securite Habitacle, 94046 Creteil (FR)
(72) Inventeur: PETEL, Laurent, F-94046 Creteil (FR)
(74) Mandataire: Pothmann, Karsten
(86) Numéro de dépôt international: PCT/EP2011/066824
(87) Numéro de publication internationale: WO 2012/041885

(56) Documents cités:
- WO-A1-2012/017214
- WO-A1-2012/022637
- CN-A- 101 319 586
- CN-A- 101 527 061
- FR-A1- 2 942 755
- KR-A- 20050 022 929
- US-A1- 2008 034 422
- US-B1- 7 650 509

## Description

L'invention concerne un procédé d'appairage d'un téléphone mobile avec un véhicule automobile, et en particulier un téléphone mobile utilisé pour le verrouillage/déverrouillage et/ou le démarrage sans contact du véhicule automobile. L'invention concerne également un ensemble de verrouillage/déverrouillage et/ou de démarrage de véhicule automobile et une application d'appairage téléchargeable dans un téléphone mobile.

Une nouvelle catégorie de clés apparaît progressivement sur le marché. De telles clés sont basées sur une détection de la clé par le véhicule lorsque l'utilisateur s'en rapproche. Un calculateur utilise un émetteur placé dans le véhicule pour communiquer avec la clé disposée à proximité du véhicule. Lorsque le calculateur détermine que la clé présente est bien la clé qui lui est associée, il procède au déverrouillage des portières du véhicule. L'utilisateur peut alors accéder à l'habitacle du véhicule. Le calculateur permet également le démarrage du moteur par appui sur un bouton de démarrage. Lorsque l'utilisateur quitte le véhicule avec la clé, le calculateur peut détecter son éloignement et procéder au verrouillage des portières.

La publication FR 2 942 755 A1 divulgue un système pour contrôler, par ex. déverrouiller ou démarrer, un véhicule, à l'aide d'un appareil mobile, basé sur une interaction NFC permettant de transmettre une commande, avec un identifiant, du dispositif mobile au véhicule, et n'acceptant que les commandes d'un identifiant autorisé.

La publication de demande de brevet chinois CN101319586A divulgue un procédé de location d'automobile et propose un système et un procédé de location d'automobile convenant au retour d'une automobile.

La présente invention est définie par les revendications indépendantes. Les revendications dépendantes constituent des modes de réalisation de l'invention. Les modes de réalisation de la description suivante qui ne sont pas couverts par les revendications sont considérés comme ne faisant pas partie de la présente invention.

La communication entre la clé et le véhicule peut être réalisée selon le protocole NFC (ou communication en champ proche pour Near Field Communication). Le NFC permet une liaison sans fil à courte portée, de l'ordre de quelques centimètres. Cette communication suppose une démarche volontaire de l'utilisateur et ne peut donc normalement pas être utilisée à son insu, ce qui apporte une garantie de sécurité.

On cherche aujourd'hui à développer ce type de moyen de verrouillage/déverrouillage et/ou de démarrage du véhicule sans contact tout en garantissant la sécurisation de la communication notamment vis-à-vis d'éventuelles tentatives de pirateries.

A cet effet, l'invention a pour objet un procédé d'appairage d'un téléphone mobile avec un véhicule automobile, ledit téléphone mobile ainsi apparié par ledit procédé d'appairage pouvant être utilisé pour le verrouillage/déverrouillage et/ou le démarrage dudit véhicule automobile à l'aide d'un code d'authentification, ledit téléphone mobile comprenant
- une unité de contrôle,
- une première mémoire,
- une première interface de communication configurée pour communiquer selon un protocole NFC avec une clé de verrouillage/déverrouillage du véhicule automobile,
ladite clé de verrouillage/déverrouillage comprenant :
- une deuxième interface de communication configurée pour communiquer selon un protocole NFC,
- une deuxième mémoire contenant un code d'authentification chiffré,
ledit téléphone mobile effectuant par l'intermédiaire de ladite unité de contrôle les étapes suivantes :
- recevoir une clé de déchiffrement,
- recevoir par l'intermédiaire des première et deuxième interfaces de communication au moins une partie du code d'authentification chiffré de la clé de verrouillage/déverrouillage,
- déchiffrer la au moins une partie du code d'authentification avec la clé de déchiffrement,
- stocker dans la première mémoire la au moins une partie du code d'authentification déchiffré,
- charger une autre partie dudit code depuis un support différent parmi l'ensemble constitué d'un véhicule et d'un serveur à distance, et
- communiquer avec le véhicule automobile par l'intermédiaire de la première interface de communication pour verrouiller/déverrouiller et ou démarrer le véhicule automobile sur la base du code d'authentification.

Le procédé d'appairage selon l'invention peut en outre comporter une ou plusieurs des caractéristiques suivantes, prises seules ou en combinaison :
- on peut saisir la clé de déchiffrement sur le téléphone mobile.
- le téléphone mobile peut récupérer la clé de déchiffrement du réseau GSM.
- ladite au moins une partie du code d'authentification chiffré peut être chiffrée par cryptographie symétrique.
- ladite au moins une partie du code d'authentification chiffré peut être chiffrée par cryptographie asymétrique à clé publique/privée.
- ladite au moins une partie du code d'authentification chiffré peut être chiffrée par le protocole de Diffie-Hellman.
- on peut révoquer la possibilité du téléphone mobile de verrouiller/déverrouiller et/ou de démarrer le véhicule automobile lorsque le véhicule automobile authentifie à nouveau la clé de verrouillage/déverrouillage et/ou de démarrage (3).
- on peut révoquer la possibilité du téléphone mobile de verrouiller/déverrouiller et/ou de démarrer le véhicule automobile par commutation d'un commutateur de la clé de verrouillage/déverrouillage et/ou de démarrage.
- on peut révoquer la possibilité du téléphone mobile de verrouiller/déverrouiller et/ou de démarrer le véhicule automobile par sélection d'un menu de l'ordinateur de bord du véhicule automobile.
- le véhicule peut comporter une mémoire dans laquelle est stockée un code primaire et un algorithme de dérivation apte à produire un code dérivé à partir dudit code primaire, et en ce que le véhicule est apte à identifier un téléphone mobile comme comportant un code dérivé différent d'un code dérivé actuellement actif, et à révoquer le code dérivé actuellement actif lorsqu'un téléphone est identifié.
- le téléphone mobile peut être configuré pour transmettre au véhicule une information indicatrice d'un ordre d'apparition des codes d'authentification successifs et en ce que le véhicule est configuré pour n'autoriser l'activation d'un code d'authentification que si l'information d'ordre indique une incrémentation dudit ordre d'apparition successif par rapport à l'information d'ordre transmise lors de l'authentification avec le code d'authentification précédent.

L'invention a aussi pour objet un téléphone mobile apparié par un procédé d'appairage tel que décrit précédemment et caractérisé en ce que ledit téléphone mobile est apte à fonctionner comme un dispositif de verrouillage/déverrouillage et/ou de démarrage du véhicule sur la base d'une communication NFC.

L'invention a aussi pour objet un ensemble de verrouillage/déverrouillage et/ou de démarrage de véhicule automobile comprenant :
- une clé de verrouillage/déverrouillage et/ou de démarrage d'un véhicule automobile comprenant :
   - une première interface de communication configurée pour communiquer selon un protocole NFC,
   - une première mémoire contenant un code d'authentification chiffré,
- un téléphone mobile comprenant :
   - une deuxième interface de communication configurée pour communiquer selon un protocole NFC,
   - une deuxième mémoire,
   - une unité de contrôle configurée pour :
      - recevoir une clé de déchiffrement,
      - recevoir par l'intermédiaire des première et deuxième interfaces de communication le code d'authentification chiffré de la clé de verrouillage/déverrouillage et/ou de démarrage,
      - déchiffrer le code d'authentification avec la clé de déchiffrement et stocker dans la deuxième mémoire le code d'authentification déchiffré,
      - charger une autre partie dudit code depuis un support différent parmi l'ensemble constitué d'un véhicule et d'un serveur à distance, et
      - communiquer avec le véhicule automobile par l'intermédiaire de la deuxième interface de communication pour déverrouiller ledit véhicule automobile sur la base dudit code d'authentification.

L'invention a aussi pour objet une application d'appairage adaptée pour être téléchargée dans un téléphone mobile ledit téléphone mobile comprenant :
- une unité de contrôle,
- une première mémoire,
- une première interface de communication configurée pour communiquer selon un protocole NFC avec une clé de verrouillage/déverrouillage du véhicule automobile,
ladite clé de verrouillage/déverrouillage comprenant :
- une deuxième interface de communication configurée pour communiquer selon un protocole NFC,
- une deuxième mémoire contenant un code d'authentification chiffré,
ladite application d'appairage étant adaptée, lorsqu'elle est exécutée par ledit téléphone mobile, à causer le dit téléphone mobile à effectuer par l'intermédiaire de ladite unité de contrôle les étapes suivantes :
- recevoir une clé de déchiffrement,
- recevoir par l'intermédiaire des première et deuxième interfaces de communication au moins une partie du code d'authentification chiffré de la clé de verrouillage/déverrouillage,
- déchiffrer la au moins une partie du code d'authentification avec la clé de déchiffrement,
- charger une autre partie dudit code depuis un support différent parmi l'ensemble constitué d'un véhicule et d'un serveur à distance, et
communiquer avec le véhicule automobile par l'intermédiaire de la première interface de communication pour verrouiller/déverrouiller et ou démarrer le véhicule automobile sur la base du code d'authentification.

D'autres avantages et caractéristiques apparaîtront à la lecture de la description de l'invention donnée à titre d'exemple, ainsi que sur les figures annexées sur lesquelles :
- la figure 1 représente une schématique d'un ensemble de verrouillage/déverrouillage et/ou de démarrage de véhicule automobile,
- la figure 2 représente une vue schématique d'éléments de l'ensemble de la figure 1, et
- la figure 3 représente un organigramme des étapes d'un procédé d'appairage.

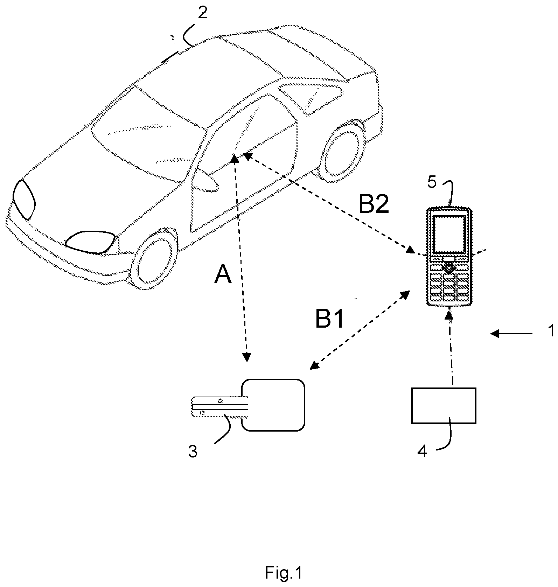

Sur ces figures, les éléments identiques portent les mêmes numéros de référence. On a représenté sur la figure 1 , un ensemble de verrouillage/déverrouillage et/ou de démarrage 1 d'un véhicule automobile 2. L'ensemble 1 comprend une clé de verrouillage/déverrouillage et/ ou de démarrage 3 du véhicule automobile 2, un support 4 de clé de déchiffrement et un téléphone mobile 5.

Le véhicule automobile 2 et la clé de verrouillage/déverrouillage et/ou de démarrage 3 sont authentifiées mutuellement par cryptographie à clé secrète (ou symétrique) définissant un code d'authentification, lors de l'appairage en usine ou concession. La clé de verrouillage/déverrouillage et/ou de démarrage 3 comporte une interface de communication 6 configurée pour communiquer selon le protocole NFC. La clé peut également présenter un insert métallique présentant un motif de verrouillage/déverrouillage unique associée à une serrure du véhicule.

La clé de verrouillage/déverrouillage et/ou de démarrage 3 est alors configurée pour verrouiller/déverrouiller le véhicule automobile sans contact (« Remote Keyless Entry » ou RKE en anglais), tel que le verrouillage/déverrouillage du système de fermeture centralisée du véhicule, par simple rapprochement de la clé 3 du véhicule 2 pour la communication selon le protocole NFC du code d'authentification.

Le protocole NFC ou communication en champ proche (pour Near Field Communication) est une liaison sans fil à courte portée, de l'ordre de quelques centimètres qui utilise un protocole d'échanges de données basé sur des radiofréquences de très courte portée. Il s'agit d'une extension des techniques de radio-identification qui, tout en se basant sur la norme ISO/IEC 14443, permet la communication entre périphériques en mode pair à pair. Le protocole NFC est basé sur un couplage inductif et une modulation de charge au niveau d'un appareil esclave.

Au contraire d'autres techniques de radio-identification ou du Bluetooth dont la portée est d'une dizaine de mètres, la technique NFC est utilisable sur de très courtes distances, quelques centimètres. Elle suppose une démarche volontaire de l'utilisateur et ne peut donc normalement pas être utilisée à son insu, ce qui apporte une garantie de sécurité pour des transactions sensibles comme le verrouillage/déverrouillage et/ou le démarrage d'un véhicule.

La technologie NFC est actuellement développée par un consortium industriel regroupé sous le nom de Forum NFC. La technologie NFC est dérivée de la technologie RFID (Radio Frequency Identification) et utilise des composants ou processeurs NFC présentant plusieurs modes de fonctionnement, notamment un mode lecteur et un mode émulation de carte.

En mode lecteur, un processeur NFC fonctionne comme un lecteur RFID conventionnel pour accéder en lecture ou écriture à une puce RFID. Le processeur NFC émet un champ magnétique, envoie des données par modulation de l'amplitude du champ magnétique et reçoit des données par modulation de charge et couplage inductif. Ce mode est également qualifié de mode actif car le processeur NFC émet un champ magnétique dans ce mode.

Dans le mode émulation, un processeur NFC fonctionne de façon passive à la manière d'un transpondeur pour dialoguer avec un autre lecteur et être vu par l'autre lecteur comme une puce RFID. Le processeur n'émet pas de champ magnétique, reçoit des données en démodulant un champ magnétique émis par l'autre lecteur et émet des données par modulation de l'impédance de son circuit d'antenne (modulation de charge). Ce mode est également qualifié de mode passif, car le processeur NFC n'émet pas de champ magnétique dans ce mode.

D'autres modes de communication peuvent être mis en œuvre, notamment un mode dit "device" où un composant doit s'apparier avec un autre processeur NFC se trouvant dans le même mode de fonctionnement, chaque processeur NFC se place alternativement dans un état passif (sans émission de champ) pour recevoir des données et dans un état actif (avec émission de champ) pour émettre des données.

Dans ces trois modes de fonctionnement, un processeur NFC peut mettre en œuvre plusieurs protocoles de communication sans contact par exemple ISO 14443-A, ISO 14443-B ou ISO 15693. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif.

Un certain nombre de normes définissent le protocole NFC :
- NFCIP-1 (ISO/IEC 18092) définit l'interface et le protocole de communication entre deux périphériques NFC;
- ISO/IEC 14443-1 à ISO/IEC 14443-4 définissent la communication avec des circuits intégrés sans contact;
- NDEF (NFC Data Exchange Format) définit le format d'échange logique des données.

La communication NFC présente généralement les caractéristiques suivantes :
- Débits de communication : 106, 212, 424 ou 848 kbit/s ;
- Gamme de fréquence : 13,56 MHz ;
- Distance de communication : environ 10 cm ;
- Mode de communication : half-duplex ou full-duplex ;

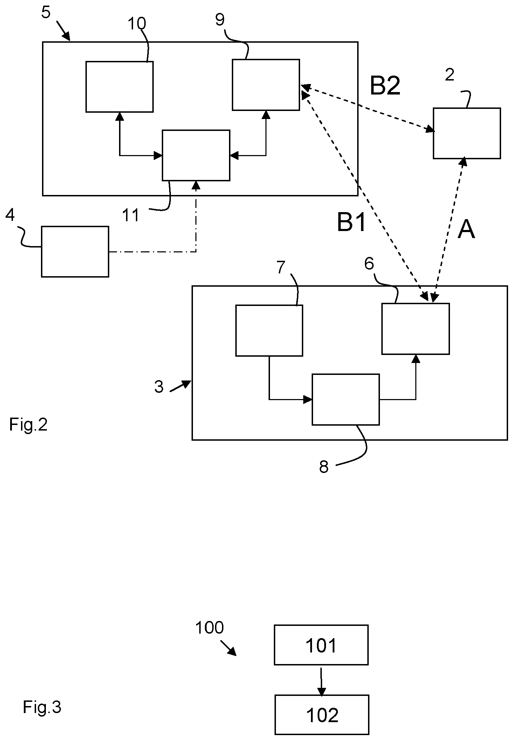

Selon un premier mode de réalisation, le code d'authentification est chiffré par cryptographie asymétrique et stocké dans une mémoire 7 de la clé de verrouillage/déverrouillage et/ou de démarrage 3 (figure 2).

La clé de verrouillage/déverrouillage et/ou de démarrage 3 comporte en outre une unité de traitement 8. L'unité de traitement 8, telle qu'un microcontrôleur, est configurée pour communiquer avec le véhicule automobile 2 par l'intermédiaire de cette interface de communication 6 pour déverrouiller le véhicule automobile 2 sur la base du code d'authentification chiffré (double flèche A sur les figures 1 et 2). La clé 3 forme ainsi de façon connue en soi un identifiant électronique de l'utilisateur, permettant son authentification pour permettre le verrouillage/déverrouillage des ouvrants du véhicule, un accès à l'habitacle du véhicule et/ou le démarrage dudit véhicule. Une fois qu'il a accédé à l'habitacle du véhicule, l'utilisateur peut disposer la clé 3 dans une fente d'un lecteur NFC du véhicule, typiquement ménagée au niveau de la planche de bord. L'introduction de la clé 3 dans cette fente permet d'assurer le démarrage du véhicule. Le démarrage du moteur peut par exemple être initié par appui sur un bouton disposé sur la planche de bord.

Le téléphone mobile 5 (dit « Smartphone ») comporte une deuxième interface de communication 9 configurée pour communiquer selon le protocole NFC, une deuxième mémoire 10 et une unité de contrôle 11.

L'unité de contrôle 11, telle qu'un microcontrôleur, est configurée pour saisir et stocker dans la deuxième mémoire 10 la clé de déchiffrement du support 4.

La clé de déchiffrement est par exemple lue par l'utilisateur sur le support 4 puis saisi sur le téléphone mobile 5 via une interface de saisie, tel que le clavier. La deuxième mémoire 10 est par exemple la carte SIM du téléphone mobile 5. La clé de déchiffrement peut aussi être récupérée du réseau GSM.

L'unité de contrôle 11 est également configurée pour recevoir par l'intermédiaire des première et deuxième interfaces de communication 6, 9, le code d'authentification chiffré de la clé de verrouillage/déverrouillage et/ou de démarrage 3, le déchiffrer avec la clé de déchiffrement, puis stocker dans la deuxième mémoire 10 le code d'authentification déchiffré.

Ainsi, on peut apparier le téléphone mobile 5 avec un véhicule automobile, ledit téléphone mobile apparié pouvant être utilisé pour le verrouillage/déverrouillage et/ou le démarrage dudit véhicule automobile en configurant le téléphone mobile 5 pour recevoir un code d'authentification nécessaire au verrouillage/déverrouillage et/ou au démarrage du véhicule automobile, par communication NFC d'une clé de verrouillage/déverrouillage et/ou de démarrage du véhicule automobile 3 (double flèche B1 sur les figures 1 et 2).

L'unité de contrôle 11 est aussi configurée pour communiquer avec le véhicule automobile 2 par l'intermédiaire de la deuxième interface de communication 9 pour verrouiller/déverrouiller et ou démarrer le véhicule automobile 2 sur la base du code d'authentification (double flèche B2 sur les figures 1 et 2).

Selon le premier mode de réalisation dans lequel le code d'authentification est chiffré par cryptographie asymétrique à clé publique/privée, la deuxième mémoire 10 du téléphone mobile 5 contient une clé publique et la deuxième unité de contrôle 9 est configurée pour :
- saisir et/ou stocker dans la deuxième mémoire une clé privée de déchiffrement du code d'authentification,
- lire avec la clé publique le code d'authentification chiffré de la clé de verrouillage/déverrouillage et/ou de démarrage 3,
- déchiffrer le code d'authentification avec la clé privée.

Selon un deuxième mode de réalisation, le code d'authentification de la clé de verrouillage/déverrouillage et/ou de démarrage reçu par le téléphone mobile est chiffré par le protocole de Diffie-Hellman. La deuxième mémoire 10 du téléphone mobile 5 contient alors des données de Diffie-Hellman, par exemple issues du support 4 et la deuxième unité de contrôle 11 est configurée pour :
- générer et échanger avec la clé de verrouillage/déverrouillage et/ou de démarrage3 des valeurs de Diffie-Hellman pour déterminer une clé secrète de déchiffrement du code d'authentification chiffré, à partir des données de Diffie-Hellman,
- déchiffrer le code d'authentification avec la clé secrète de déchiffrement.

Selon un troisième mode de réalisation, le code d'authentification est chiffré par cryptographie symétrique.

On va maintenant décrire les principales étapes du procédé d'appairage 100 du téléphone mobile 5 au véhicule automobile 2 (figure 3).

Dans une première étape 101, on saisit une clé de déchiffrement sur le téléphone mobile 5 pour déchiffrer le code d'authentification. Pour cela, l'utilisateur peut lancer une application de configuration du téléphone mobile 5 pour par exemple saisir la clé de déchiffrement ou pour que le téléphone mobile récupère la clé de déchiffrement du réseau GSM.

Puis, dans une deuxième étape 102, successive ou préalable à la première étape 101, on approche le téléphone mobile 5 de la clé de verrouillage/déverrouillage et/ou de démarrage3 pour recevoir le code d'authentification chiffré par communication NFC (double flèche B1).

Le téléphone mobile 5 est alors apte à déverrouiller le véhicule automobile 2 (double flèche B2).

Le verrouillage du véhicule 2 peut être réalisé soit automatiquement lorsque l'utilisateur s'éloigne du véhicule, soit par pression d'un commutateur de la clé de verrouillage/déverrouillage et/ou de démarrage3, induisant l'émission d'une commande de fermeture par l'intermédiaire d'un autre circuit d'antenne à destination d'un récepteur du véhicule.

La révocation du téléphone mobile 5 comme clé virtuelle permettant de verrouiller/déverrouiller le véhicule automobile 2 peut se faire par commutation d'un commutateur ou par combinaison de commutation sur différents commutateurs de la clé de verrouillage/déverrouillage et/ou de démarrage3.

On peut aussi prévoir que l'utilisateur révoque la possibilité du téléphone mobile 5 de verrouiller/déverrouiller le véhicule automobile 2 par sélection d'un menu de l'ordinateur de bord du véhicule automobile.

Alternativement, on prévoit que la possibilité du téléphone mobile 5 de déverrouiller le véhicule automobile soit révoquée lorsque le véhicule automobile 2 authentifie de nouveau la clé de verrouillage/déverrouillage et/ou de démarrage3, c'est-à-dire lorsque la clé de verrouillage/déverrouillage et/ou de démarrage3 est approchée de nouveau du véhicule automobile 2 (double flèche A).

La révocation de la clé de verrouillage /déverrouillage est selon un autre exemple, effectué par utilisation d'une série de clé préenregistrées dans le véhicule et chargées dans différents téléphone mobiles successifs depuis un support, qu'il soit le véhicule ou un autre support de tels codes d'authentification, en suivant la ordre initial de cette série de codes pré-établis.

Ainsi lorsqu'un nouveau téléphone mobile se voit chargé avec un code d'authentification, et qu'il est fait usage de ce téléphone mobile avec ce code d'authentification, le véhicule identifie la mise en œuvre de ce nouveau code et en déduit l'obsolescence du code précédemment utilisé. Il en découle la neutralisation du téléphone précédemment chargé avec un code d'authentification.

Dans un autre mode de réalisation, le véhicule comporte une mémoire dans laquelle est stocké un code primaire et un algorithme de dérivation apte à produire un code dérivé à partir de ce code primaire et le véhicule est apte à identifier un téléphone mobile comme comportant un code dérivé différent du code dérivé actuellement actif et à révoquer le code dérivé actuellement actif lorsqu'un tel téléphone est identifié.

A cet effet un téléphone chargé avec un nouveau code d'authentification, établi par une dérivation du code original, commence par transmette au véhicule des données de différenciation consistant en un numéro d'identification du téléphone, ainsi qu'une date et une heure. Ces données ont été utilisées préalablement pour établir la clé dérivée, par exemple dans un serveur distant. Le véhicule, recevant ces donnée de différenciation, réalise lui-même une dérivation produisant la valeur de la clé dérivée au sein du véhicule. Enfin, le véhicule envoie une valeur aléatoire au téléphone équipé de la clé dérivée ainsi présente de part et d'autre, c'est-à-dire dans le véhicule et dans le téléphone mobile. Le téléphone mobile traite cette valeur aléatoire afin de produire une signature à l'aide de la clé dérivée. Le téléphone envoie ensuite cette signature au véhicule qui, ayant lui-même calculé cette signature selon un même algorithme connu en soi, vérifie l'égalité entre les deux signatures et procède au déverrouillage ou au démarrage en cas d'égalité vérifiée.

Le téléphone est préférentiellement configuré pour transmettre au véhicule une information indicatrice d'un ordre d'apparition des codes d'authentification successifs et le véhicule est configuré pour n'autorisé l'activation d'un code d'authentification que si l'information d'ordre indique une incrémentation dudit ordre d'apparition successif par rapport à l'information d'ordre transmise lors d'une authentification avec le code d'authentification précédent.

L'information indicatrice de l'ordre d'apparition est par exemple transmise simultanément avec les données de différenciation précédemment décrites comme comprenant un numéro d'identification du téléphone et un date et une heure, ou encore un temps absolu.

En variante, l'information indicatrice de l'ordre d'apparition est elle-même une valeur de temps ou d'intervalle de temps, exprimée par exemple en minutes. L'information indicatrice de l'ordre d'apparition est par exemple une valeur numérique comprise entre 1 et 100, et codée sur un champs de 7 bits par exemple placée en tête d'un message comprenant ces différentes données.

Ainsi, on évite qu'un code d'authentification prévu pour être supplanté par un nouveau code ne puisse être réactivé dans le véhicule au détriment d'un code actuellement actif.

Ainsi, on peut utiliser la technologie NFC pour appairer un téléphone mobile 5 à un véhicule automobile 2 à l'aide d'une des clés du véhicule automobile 2 par un transfert de données chiffrés par exemple par cryptographie asymétrique à clé publique/privée, par cryptographie symétrique ou par le protocole de Diffie-Hellman. Le téléphone mobile 5 forme alors une clé virtuelle permettant l'authentification de l'utilisateur pour le verrouillage/déverrouillage des ouvrants du véhicule, un accès à l'habitacle du véhicule et/ou le démarrage du véhicule.

Dans le mode de réalisation décrit ci-dessus, on charge donc un code d'authentification ou au moins nue parte de celui-ce depuis un support stockant initialement ce code, qui est ici un identifiant préexistant du véhicule .

Le procédé de chargement de ou des codes d'authentification dans le téléphone qui a été décrit ci-dessus peut, en alternative, être implémenté de la façon décrite ci-après.

Dans ce mode de réalisation, un serveur web est mis à disposition de l'utilisateur, lequel présent à ce dernier une interface lui permettant de saisir des données personnelles incluant notamment des données d'identification de son véhicule. Le serveur stocke une base de données dans laquelle une série de véhicule sont pré-enregsitrés à cet effet, laquelle base de données est utilisée par lui pour identifier le véhicule signifié par l'utilisateur.

Dans une deuxième étape, le serveur requiert de la part de l'utilisateur que ce dernier saisisse au moins une donnée d'identification du téléphone à charger, notamment le numéro de téléphone de ce dernier.

Une fois ces données obtenues, qui peuvent être complétées par la demande d'un mot de passe pré-établi servant à authentifier l'utilisateur de ce serveur web, le serveur envoie les données secrètes nécessaires au verrouillage/déverrouillage et/ou au démarrage du véhicule sur le téléphone de l'utilisateur.

Grâce à un tel procédé, un utilisateur A peut demander le chargement des données d'authentification sur le téléphone d'un utilisateur B, par exemple d'un utilisateur prévu comme devant utiliser occasionnellement ou ponctuellement le véhicule.

Dans ce mode de réalisation, on charge donc un code d'authentification depuis un support stockant initialement ce code, ce support étant ici un serveur à distance .

Dans une variante le chargement par GSM directement sur le téléphone, dans l'exemple ci-dessus typiquement par SMS, peut être remplacé par un téléchargement effectué via Internet, notamment par couplage du téléphone avec un ordinateur personnel connecté à Internet, la connexion entre le téléphone et l'ordinateur étant par exemple effectuée par bluetooth ou tout autre liaison telle que USB.

Dans un mode de réalisation implémentant un degré de sécurité plus élevé, l'authentification de l'utilisateur souhaitant initier un chargement du code d'authentification sur le téléphone comporte un degré d'exigence accrue, qui consiste en le fait de prouver auprès du serveur la possession physique de la clé de verrouillage/déverrouillage et/ou de démarrage initiale du véhicule, ou encore d'un téléphone lui-même déjà chargé du code d'authentification.

Dans ce mode de réalisation, on prévoit que, alors que l'utilisateur est connecté au serveur web de chargement, l'utilisateur approche la clé de verrouillage/déverrouillage et/ou de démarrage du véhicule d'un téléphone lui ayant servi à se connecter au serveur web, i.e. un téléphone équipé d'un navigateur web, afin de mettre en œuvre une transmission de données secrètes mémorisées dans la clé vers le serveur web via le téléphone ainsi mis en connexion avec la clé de verrouillage/déverrouillage et/ou de démarrage du véhicule. Cette mis en connexion est par exemple réalisé par liaison NFC.

Afin de sécuriser le lancement du chargement du code d'authentification, on prévoit, de manière additionnelle ou indépendamment de l'apport de la preuve de détention de la clé précédemment décrite, que, en variante, le code d'authentification nécessaire au téléphone portable pour verrouiller/déverrouiller et/ou démarrer le véhicule soit constitué d'au moins deux éléments. Un de ces éléments est chargé à distance depuis le serveur web tel que décrit précédemment, et l'autre n'est pas prévu pour être chargé depuis le serveur web mais est transféré par une liaison directe entre la clé préexistante et le téléphone à charger.

Ainsi, afin de rendre opérationnel un téléphone en déverrouillage du véhicule, l'utilisateur est obligée de demander un chargement d'un des éléments du code d'authentification auprès du serveur web, et, en outre, de procéder à un rapprochement physique de l'identifiant et du téléphone. Cette double étape de chargement permet d'évite aussi bien qu'un utilisateur frauduleux procède à un chargement sur son téléphone en ayant obtenu les donnée d'identification du véhicule ainsi que l'éventuel mot de passe d'accès au serveur, et évite en outre, qu'un utilisateur frauduleux, procède à un chargement de sont téléphone par simple rapprochement de la clé qui lui aurait été provisoirement confiée.

Dans ce mode de réalisation, on charge donc un élément constituant du code d'authentification depuis un support stockant cet élément lequel support est un serveur à distance, et on charge un autre élément constituant le code d'authentification depuis une clé physique détenu par l'utilisateur, lequel forme également support dans lequel est pré-stocké ce deuxième élément.

Dans encore un autre mode de réalisation, les données d'authentification nécessaire au déverrouillage du véhicule sont chargée dans le téléphone en approchant ce dernier d'un équipement embarqué sur le véhicule et apte à transférer ces données sur un téléphone.

Ainsi, on prévoit un véhicule équipé d'un module d'appairage comprenant une module de communication apte à établir un premier échange avec un téléphone notamment par communication NFC, et , dans une deuxième étape, éventuellement soumise à saisie d'un mot de passe attendu par cet équipement, notamment saisie via l'interface du téléphone, à transférer par la même communication NFC, les données d'authentification sur le téléphone.

La communication vers l'équipement du véhicule permettant de charger les donnés d'authentification dans le téléphone peut en variante être réalisée par tout autre mode de communication, tel que bluetooth, GSM, ou un échange bidirectionnel dans lequel une requête est faite en basse fréquence et la réponse en radiofréquence.

Dan ce mode de réalisation, le support stockant initialement le code d'authentification ou une partie de celui-ce est constitué par le véhicule lui-même.

Dans un mode de réalisation d'implémentation simple, le code d'authentification ou une partie de celui-ci est charge dans le téléphone par utilisation d'e l'interface clavier/écran de ce dernier, l'utilisateur ayant obtenu le code d'authentification par exemple par courrier ou à l'acquisition de son véhicule.

Dans les différents modes de réalisation décrits on peut envisager que le téléphone mobile ainsi apparié fonctionne comme un dispositif de verrouillage/déverrouillage et/ou de démarrage sur la base d'une communication NFC. Par exemple on peut envisager un accès au véhicule à l'aide du téléphone apparié par communication NFC et le démarrage du véhicule par communication bluetooth.

## Revendications

1. Procédé d'appairage d'un téléphone mobile avec un véhicule automobile, ledit téléphone mobile ainsi apparié par ledit procédé d'appairage pouvant être utilisé pour le verrouillage/déverrouillage et/ou le démarrage dudit véhicule automobile à l'aide d'un code d'authentification, ledit téléphone mobile comprenant
- une unité de contrôle (11),
- une première mémoire (7),
- une première interface de communication (9) configurée pour communiquer selon un protocole NFC avec une clé de verrouillage/déverrouillage du véhicule automobile,
ladite clé de verrouillage/déverrouillage comprenant :
- une deuxième interface de communication (6) configurée pour communiquer selon un protocole NFC,
- une deuxième mémoire (10) contenant un code d'authentification chiffré,
ledit téléphone mobile effectuant par l'intermédiaire de ladite unité de contrôle (11) les étapes suivantes :
- recevoir une clé de déchiffrement,
- recevoir par l'intermédiaire des première et deuxième interfaces de communication (6,9) au moins une partie du code d'authentification chiffré de la clé de verrouillage/déverrouillage (3),
- déchiffrer la au moins une partie du code d'authentification avec la clé de déchiffrement,
- stocker dans la première mémoire (7) la au moins une partie du code d'authentification déchiffré,
- charger une autre partie dudit code depuis un support différent parmi l'ensemble constitué d'un véhicule et d'un serveur à distance, et
- communiquer avec le véhicule automobile (2) par l'intermédiaire de la première interface de communication (9) pour verrouiller/déverrouiller et ou démarrer le véhicule automobile (2) sur la base du code d'authentification.

2. Procédé d'appairage selon la revendication 1, **caractérisé en ce qu'**on saisit la clé de déchiffrement sur le téléphone mobile.

3. Procédé d'appairage selon la revendication 1, **caractérisé en ce que** le téléphone mobile récupère la clé de déchiffrement du réseau GSM.

4. Procédé d'appairage selon l'une des revendications 1 à 3, **caractérisé en ce que** ladite au moins une partie du code d'authentification chiffré est chiffré par cryptographie symétrique.

5. Procédé d'appairage selon l'une des revendications 1 à 3, **caractérisé en ce que** ladite au moins une partie du code d'authentification chiffré est chiffré par cryptographie asymétrique à clé publique/privée.

6. Procédé d'appairage selon l'une des revendications 1 à 3, **caractérisé en ce que** ladite au moins une partie du code d'authentification chiffré est chiffré par le protocole de Diffie-Hellman.

7. Procédé d'appairage selon l'une des revendications 1 à 6, **caractérisé en ce qu'**on révoque la possibilité du téléphone mobile de verrouiller/déverrouiller et/ou de démarrer le véhicule automobile lorsque le véhicule automobile authentifie à nouveau la clé de verrouillage/déverrouillage et/ou de démarrage (3).

8. Procédé d'appairage selon l'une des revendications 1 à 6, **caractérisé en ce qu'**on révoque la possibilité du téléphone mobile de verrouiller/déverrouiller et/ou de démarrer le véhicule automobile par commutation d'un commutateur de la clé de verrouillage/déverrouillage et/ou de démarrage (3)

9. Procédé d'appairage selon l'une des revendications 1 à 6, **caractérisé en ce qu'**on révoque la possibilité du téléphone mobile de verrouiller/déverrouiller et/ou de démarrer le véhicule automobile par sélection d'un menu de l'ordinateur de bord du véhicule automobile.

10. Procédé d'appairage selon l'une des revendications 1 à 6, **caractérisé en ce que** le véhicule comporte une mémoire dans laquelle est stockée un code primaire et un algorithme de dérivation apte à produire un code dérivé à partir dudit code primaire, et **en ce que** le véhicule est apte à identifier un téléphone mobile comme comportant un code dérivé différent d'un code dérivé actuellement actif, et à révoquer le code dérivé actuellement actif lorsqu'un téléphone est identifié.

11. Procédé d'appairage selon la revendication 10, **caractérisé en ce que** le téléphone mobile est configuré pour transmettre au véhicule une information indicatrice d'un ordre d'apparition des codes d'authentification successifs et **en ce que** le véhicule est configuré pour n'autoriser l'activation d'un code d'authentification que si l'information d'ordre indique une incrémentation dudit ordre d'apparition successif par rapport à l'information d'ordre transmise lors de l'authentification avec le code d'authentification précédent.

12. Téléphone mobile apparié par un procédé d'appairage selon l'une quelconque des revendication 1 à 11, **caractérisé en ce que** ledit téléphone mobile est apte à fonctionner comme un dispositif de verrouillage/déverrouillage et/ou de démarrage du véhicule sur la base d'une communication NFC.

13. Ensemble de verrouillage/déverrouillage de véhicule automobile comprenant :
- une clé de verrouillage/déverrouillage d'un véhicule automobile (3), ladite clé de verrouillage/déverrouillage comprenant :
- une première interface de communication (6) configurée pour communiquer selon un protocole NFC,
- une première mémoire (10) contenant un code d'authentification chiffré,
- un téléphone mobile (5) comprenant :
- une deuxième interface de communication (6) configurée pour communiquer selon un protocole NFC,
- une deuxième mémoire (7),
- une unité de contrôle (8) configurée pour :
- recevoir une clé de déchiffrement,
- recevoir par l'intermédiaire des première et deuxième interfaces de communication (6,9) au moins une partie du code d'authentification chiffré de la clé de verrouillage/déverrouillage (3),
- déchiffrer la au moins une partie du code d'authentification avec la clé de déchiffrement et stocker dans la deuxième mémoire(7) la au moins une partie du code d'authentification déchiffré,
- charger une autre partie dudit code depuis un support différent parmi l'ensemble constitué d'un véhicule et d'un serveur à distance, et
- communiquer avec le véhicule automobile (2) par l'intermédiaire de la première interface de communication (9) pour verrouiller/déverrouiller et ou démarrer le véhicule automobile (2) sur la base du code d'authentification.

14. Application d'appairage adaptée pour être téléchargée dans un téléphone mobile (5) ledit téléphone mobile (5) comprenant :
- une unité de contrôle (11),
- une première mémoire (7),
- une première interface de communication (9) configurée pour communiquer selon un protocole NFC avec une clé de verrouillage/déverrouillage du véhicule automobile,
ladite clé de verrouillage/déverrouillage comprenant :
- une deuxième interface de communication (6) configurée pour communiquer selon un protocole NFC,
- une deuxième mémoire (10) contenant un code d'authentification chiffré,
ladite application d'appairage étant adaptée, lorsqu'elle est exécutée par ledit téléphone mobile, à causer le dit téléphone mobile à effectuer par l'intermédiaire de ladite unité de contrôle (11) les étapes suivantes :
- recevoir une clé de déchiffrement,
- recevoir par l'intermédiaire des première et deuxième interfaces de communication (6,9) au moins une partie du code d'authentification chiffré de la clé de verrouillage/déverrouillage (3),
- déchiffrer la au moins une partie du code d'authentification avec la clé de déchiffrement,
- charger une autre partie dudit code depuis un support différent parmi l'ensemble constitué d'un véhicule et d'un serveur à distance, et
- communiquer avec le véhicule automobile (2) par l'intermédiaire de la première interface de communication (9) pour verrouiller/déverrouiller et ou démarrer le véhicule automobile (2) sur la base du code d'authentification.

## Patentansprüche

1. Verfahren zur Paarung eines Mobiltelefons mit einem Kraftfahrzeug, wobei das Mobiltelefon, das durch das Verfahren zur Paarung so gepaart wird, zum Sperren/Entsperren und/oder zum Starten des Kraftfahrzeugs mit Hilfe eines Authentifizierungscodes verwendet werden kann, wobei das Mobiltelefon umfasst:
- eine Steuereinheit (11),
- einen ersten Speicher (7),
- eine erste Kommunikationsschnittstelle (9), die dafür ausgelegt ist, gemäß einem NFC-Protokoll mit einem Schlüssel zum Sperren/Entsperren des Kraftfahrzeugs zu kommunizieren,
wobei der Schlüssel zum Sperren/Entsperren umfasst:
- eine zweite Kommunikationsschnittstelle (6), die dafür ausgelegt ist, gemäß einem NFC-Protokoll zu kommunizieren,
- einen zweiten Speicher (10), der einen chiffrierten Authentifizierungscode enthält,
wobei das Mobiltelefon mit Hilfe der Steuereinheit (11) die folgenden Schritte durchführt:
- Empfangen eines Dechiffrierungsschlüssels,
- Empfangen, mit Hilfe der ersten und zweiten Kommunikationsschnittstelle (6, 9), mindestens eines Teils des chiffrierten Authentifizierungscodes des Schlüssels (3) zum Sperren/Entsperren,
- Dechiffrieren des mindestens einen Teils des Authentifizierungscodes mit dem Dechiffrierungsschlüssel,
- Speichern des mindestens einen Teils des dechiffrierten Authentifizierungscodes in dem ersten Speicher (7),
- Laden eines anderen Teils des Codes von einem anderen Träger unter der Einheit, die von einem Fahrzeug und einem entfernten Server gebildet wird, und
- Kommunizieren mit dem Kraftfahrzeug (2) mit Hilfe der ersten Kommunikationsschnittstelle (9) zum Sperren/Entsperren und/oder Starten des Kraftfahrzeugs (2) auf der Basis des Authentifizierungscodes.

2. Verfahren zur Paarung nach Anspruch 1, **dadurch gekennzeichnet, dass** der Dechiffrierungsschlüssel auf dem Mobiltelefon erfasst wird.

3. Verfahren zur Paarung nach Anspruch 1, **dadurch gekennzeichnet, dass** das Mobiltelefon den Dechiffrierungsschlüssel von dem GSM-Netz erhält.

4. Verfahren zur Paarung nach einem der Ansprüche 1 bis 3, **dadurch gekennzeichnet, dass** der mindestens eine Teil des chiffrierten Authentifizierungscodes durch symmetrische Kryptografie chiffriert wird.

5. Verfahren zur Paarung nach einem der Ansprüche 1 bis 3, **dadurch gekennzeichnet, dass** der mindestens eine Teil des chiffrierten Authentifizierungscodes durch asymmetrische Kryptografie mit einem öffentlichen/privaten Schlüssel chiffriert wird.

6. Verfahren zur Paarung nach einem der Ansprüche 1 bis 3, **dadurch gekennzeichnet, dass** der mindestens eine Teil des chiffrierten Authentifizierungscodes durch das Diffie-Hellman-Protokoll chiffriert wird.

7. Verfahren zur Paarung nach einem der Ansprüche 1 bis 6, **dadurch gekennzeichnet, dass** die Möglichkeit des Mobiltelefons, das Kraftfahrzeug zu sperren/entsperren und/oder zu starten, wenn das Kraftfahrzeug erneut den Schlüssel (3) zum Sperren/Entsperren und/oder zum Starten authentifiziert, aufgehoben wird.

8. Verfahren zur Paarung nach einem der Ansprüche 1 bis 6, **dadurch gekennzeichnet, dass** die Möglichkeit des Mobiltelefons, das Kraftfahrzeug zu sperren/entsperren und/oder zu starten, durch Umschalten eines Umschalters des Schlüssels (3) zum Sperren/Entsperren und/oder zum Starten aufgehoben wird.

9. Verfahren zur Paarung nach einem der Ansprüche 1 bis 6, **dadurch gekennzeichnet, dass** die Möglichkeit des Mobiltelefons, das Kraftfahrzeug zu sperren/entsperren und/oder zu starten, durch die Auswahl eines Menüs des Bordcomputers des Kraftfahrzeugs aufgehoben wird.

10. Verfahren zur Paarung nach einem der Ansprüche 1 bis 6, **dadurch gekennzeichnet, dass** das Fahrzeug einen Speicher umfasst, in dem ein primärer Code und ein Ableitungsalgorithmus gespeichert sind, der dafür geeignet ist, einen Code zu erzeugen, der von dem primären Code abgeleitet wird, und dadurch, dass das Fahrzeug dafür geeignet ist, ein Mobiltelefon zu identifizieren als umfassend einen anderen abgeleiteten Code als einen aktuell aktiven abgeleiteten Code, und den aktuell aktiven abgeleiteten Code aufzuheben, wenn ein Telefon identifiziert wird.

11. Verfahren zur Paarung nach Anspruch 10, **dadurch gekennzeichnet, dass** das Mobiltelefon dafür ausgelegt ist, an das Fahrzeug eine Information zu übertragen, die eine Ordnung des Auftretens aufeinanderfolgender Authentifizierungscodes anzeigt, und dadurch, dass das Fahrzeug dafür ausgelegt ist, die Aktivierung eines Authentifizierungscodes nur zu autorisieren, wenn die Ordnungsinformation eine Inkrementierung der Ordnung des aufeinanderfolgenden Auftretens in Bezug auf die Ordnungsinformation anzeigt, die bei der Authentifizierung mit dem vorhergehenden Authentifizierungscode übertragen wird.

12. Mobiltelefon, welches durch ein Verfahren zur Paarung nach einem der Ansprüche 1 bis 11 gepaart wird, **dadurch gekennzeichnet, dass** das Mobiltelefon dafür geeignet ist, als Vorrichtung zum Sperren/Entsperren und/oder zum Starten des Fahrzeugs auf der Basis einer NFC-Kommunikation betrieben zu werden.

13. Einheit zum Sperren/Entsperren eines Kraftfahrzeugs, umfassend:
- einen Schlüssel (3) zum Sperren/Entsperren eines Kraftfahrzeugs, wobei der Schlüssel zum Sperren/Entsperren umfasst:
- eine erste Kommunikationsschnittstelle (6), die dafür ausgelegt ist, um gemäß einem NFC-Protokoll zu kommunizieren,
- einen ersten Speicher (10), der einen chiffrierten Authentifizierungscode enthält,
- ein Mobiltelefon (5), umfassend:
- eine zweite Kommunikationsschnittstelle (6), die dafür ausgelegt ist, gemäß einem NFC-Protokoll zu kommunizieren,
- einen zweiten Speicher (7),
- eine Steuereinheit (8), die ausgelegt ist zum:
- Empfangen eines Dechiffrierungsschlüssels,
- Empfangen, mit Hilfe der ersten und zweiten Kommunikationsschnittstelle (6, 9), mindestens eines Teils des chiffrierten Authentifizierungscodes des Schlüssels (3) zum Sperren/Entsperren,
- Dechiffrieren des mindestens einen Teils des Authentifizierungscodes mit dem Dechiffrierungsschlüssel, und Speichern des mindestens einen Teils des dechiffrierten Authentifizierungscodes in dem zweiten Speicher (7),
- Laden eines anderen Teils des Codes von einem anderen Träger unter der Einheit, die von einem Fahrzeug und einem entfernten Server gebildet wird, und
- Kommunizieren mit dem Kraftfahrzeug (2) mit Hilfe der ersten Kommunikationsschnittstelle (9) zum Sperren/Entsperren und/oder Starten des Kraftfahrzeugs (2) auf der Basis des Authentifizierungscodes.

14. Anwendung zur Paarung, welche dafür geeignet ist, in ein Mobiltelefon (5) heruntergeladen zu werden, wobei das Mobiltelefon (5) umfasst:
- eine Steuereinheit (11),
- einen ersten Speicher (7),
- eine erste Kommunikationsschnittstelle (9), die dafür ausgelegt ist, gemäß einem NFC-Protokoll mit einem Schlüssel zum Sperren/Entsperren des Kraftfahrzeugs zu kommunizieren,
wobei der Schlüssel zum Sperren/Entsperren umfasst:
- eine zweite Kommunikationsschnittstelle (6), die dafür ausgelegt ist, gemäß einem NFC-Protokoll zu kommunizieren,
- einen zweiten Speicher (10), der einen chiffrierten Authentifizierungscode enthält,
wobei die Anwendung zur Paarung dafür geeignet ist, wenn sie von dem Mobiltelefon durchgeführt wird, zu bewirken,
dass das Mobiltelefon mit Hilfe der Steuereinheit (11) die folgenden Schritte durchführt:
- Empfangen eines Dechiffrierungsschlüssels,
- Empfangen, mit Hilfe der ersten und zweiten Kommunikationsschnittstelle (6, 9), mindestens eines Teils des chiffrierten Authentifizierungscodes des Schlüssels (3) zum Sperren/Entsperren,
- Dechiffrieren des mindestens einen Teils des Authentifizierungscodes mit dem Dechiffrierungsschlüssel,
- Laden eines anderen Teils des Codes von einem anderen Träger unter der Einheit, die von einem Fahrzeug und einem entfernten Server gebildet wird, und
- Kommunizieren mit dem Kraftfahrzeug (2) mit Hilfe der ersten Kommunikationsschnittstelle (9) zum Sperren/Entsperren und/oder Starten des Kraftfahrzeugs (2) auf der Basis des Authentifizierungscodes.

## Claims

1. Method for pairing a mobile telephone with a motor vehicle, said mobile telephone paired thus by means of said pairing method being able to be used to lock/unlock and/or start up said motor vehicle using an identification code, said mobile telephone comprising
- a control unit (11),
- a first memory (7),
- a first communication interface (9) configured to communicate according to an NFC protocol with a key for locking/unlocking the motor vehicle,
said locking/unlocking key comprising:
- a second communication interface (6) configured to communicate according to an NFC protocol,
- a second memory (10) containing an encrypted authentication code,
said mobile telephone carrying out, via said control unit (11), the following steps:
- receiving a decryption key,
- receiving, via the first and second communication interfaces (6, 9), at least one portion of the encrypted authentication code from the locking/unlocking key (3),
- decrypting the at least one portion of the authentication code using the decryption key,
- storing, in the first memory (7), the at least one portion of the decrypted authentication code,
- loading another portion of said code from a different medium from among the set consisting of a vehicle and a remote server, and
- communicating with the motor vehicle (2) via the first communication interface (9) in order to lock/unlock and/or start up the motor vehicle (2) on the basis of the authentication code.

2. Pairing method according to Claim 1, **characterized in that** the decryption key is entered on the mobile telephone.

3. Pairing method according to Claim 1, **characterized in that** mobile telephone retrieves the decryption key from the GSM network.

4. Pairing method according to one of Claims 1 to 3, **characterized in that** said at least one portion of the encrypted authentication code is encrypted by means of symmetric cryptography.

5. Pairing method according to one of Claims 1 to 3, **characterized in that** said at least one portion of the encrypted authentication code is encrypted by means of public-/private-key asymmetric cryptography.

6. Pairing method according to one of Claims 1 to 3, **characterized in that** said at least one portion of the encrypted authentication code is encrypted by means of the Diffie-Hellman protocol.

7. Pairing method according to one of Claims 1 to 6, **characterized in that** the possibility of the mobile telephone locking/unlocking and/or starting up the motor vehicle is revoked when the motor vehicle authenticates the locking/unlocking and/or starting-up key (3) again.

8. Pairing method according to one of Claims 1 to 6, **characterized in that** the possibility of the mobile telephone locking/unlocking and/or starting up the motor vehicle is revoked by switching a switch on the locking/unlocking and/or starting-up key (3).

9. Pairing method according to one of Claims 1 to 6, **characterized in that** the possibility of the mobile telephone locking/unlocking and/or starting up the motor vehicle is revoked by selecting from a menu of the onboard computer of the motor vehicle.

10. Pairing method according to one of Claims 1 to 6, **characterized in that** the vehicle includes a memory storing a primary code and a derivation algorithm capable of producing a derived code from said primary code, and **in that** the vehicle is capable of identifying a mobile telephone as including a derived code that is different from a currently active derived code, and of revoking the currently active derived code when a telephone is identified.

11. Pairing method according to Claim 10, **characterized in that** the mobile telephone is configured to transmit, to the vehicle, information indicative of an order of appearance of the successive authentication codes and **in that** the vehicle is configured to authorize the activation of an authentication code only if the order information indicates an incrementation of said successive order of appearance with respect to the order information transmitted during the authentication with the preceding authentication code.

12. Mobile telephone paired by means of a pairing method according to any one of Claims 1 to 11, **characterized in that** said mobile telephone is capable of operating as a device for locking/unlocking and/or starting up the vehicle on the basis of an NFC communication.

13. Motor vehicle locking/unlocking set comprising:
- a key for locking/unlocking a motor vehicle (3), said locking/unlocking key comprising:
- a first communication interface (6) configured to communicate according to an NFC protocol,
- a first memory (10) containing an encrypted authentication code,
- a mobile telephone (5) comprising:
- a second communication interface (6) configured to communicate according to an NFC protocol,
- a second memory (7),
- a control unit (8) configured for:
- receiving a decryption key,
- receiving, via the first and second communication interfaces (6, 9), at least one portion of the encrypted authentication code from the locking/unlocking key (3),
- decrypting the at least one portion of the authentication code using the decryption key and storing, in the second memory (7), the at least one portion of the decrypted authentication code,
- loading another portion of said code from a different medium from among the set consisting of a vehicle and a remote server, and
- communicating with the motor vehicle (2) via the first communication interface (9) in order to lock/unlock and/or start up the motor vehicle (2) on the basis of the authentication code.

14. Pairing application suitable for being downloaded on a mobile telephone (5), said mobile telephone (5) comprising:
- a control unit (11),
- a first memory (7),
- a first communication interface (9) configured to communicate according to an NFC protocol with a key for locking/unlocking the motor vehicle,
said locking/unlocking key comprising:
- a second communication interface (6) configured to communicate according to an NFC protocol,
- a second memory (10) containing an encrypted authentication code,
said pairing application being suitable, when it is executed by said mobile telephone, to cause said mobile telephone to carry out, via said control unit (11), the following steps:
- receiving a decryption key,
- receiving, via the first and second communication interfaces (6, 9), at least one portion of the encrypted authentication code from the locking/unlocking key (3),
- decrypting the at least one portion of the authentication code using the decryption key,
- loading another portion of said code from a different medium from among the set consisting of a vehicle and a remote server, and
- communicating with the motor vehicle (2) via the first communication interface (9) in order to lock/unlock and/or start up the motor vehicle (2) on the basis of the authentication code.
